# FASCICULE DE BREVET EUROPEEN

(11) **EP 0 718 090 B1**
(45) Date de publication et mention de la délivrance du brevet: **17.11.1999**
(21) Numéro de dépôt: 95119471.1
(22) Date de dépôt: 11.12.1995
(51) Int. Cl.: B29D 30/24, B29D 30/26

(54) **Tambour d'assemblage de pneumatique**
Reifenaufbautrommel
Tyre building drum

(30) Priorité: 19.12.1994 FR 9415378
(43) Date de publication de la demande: 26.06.1996
(73) Titulaire: COMPAGNIE GENERALE DES ETABLISSEMENTS MICHELIN - MICHELIN & CIE, 63040 Clermont-Ferrand Cédex (FR)
(72) Inventeur: Barody, Didier, F-63800 Conrnon-D'Auvergne (FR); Falvard, René, F-63410 Manzat (FR); Molinero, François, F-63117 Chauriat (FR)
(74) Mandataire: Bauvir, Jacques

(56) Documents cités:
- DE-B- 1 779 278
- FR-A- 1 492 577
- GB-A- 904 531
- LU-A- 58 231
- LU-A- 63 106

## Description

La présente invention concerne les tambours de fabrication de pneumatiques. L'état de la technique connaît un nombre considérable de types différents de tels tambours, du plus simple au plus complexe. Certains de ceux-ci sont développés spécialement pour une partie seulement de la fabrication d'une ébauche crue de pneumatique : on parle alors de tambours de premier temps ou de tambours de second temps. D'autres tambours sont conçus pour supporter une ébauche pendant la totalité de sa fabrication (tambour pour confection en un seul temps).

La présente invention vise plus particulièrement les tambours à épaules, c'est à dire les tambours conçus pour construire les bourrelets des pneumatiques sur les bords latéraux du tambour, et non pas à la surface radialement supérieure de celui-ci.

Parmi ces tambours, on connaît notamment des supports constitués de plusieurs pièces assemblées les unes aux autres, sur lesquels on assemble une ébauche crue, et que l'on démonte ensuite de l'intérieur du pneumatique après confection. Cependant, de tels supports ne peuvent servir que pour une seule dimension de pneumatique, et en outre leur montage et surtout leur démontage peut s'avérer complexe, voire pénible dans les applications où ce démontage est manuel.

Le brevet US 3 778 326 donne un exemple de tambour plus automatisé. Ce tambour peut prendre une position déployée dans laquelle il définit un support pour la fabrication d'une carcasse de pneumatique et une position escamotée permettant l'enlèvement de la carcasse après fabrication. Même si ce brevet indique qu'il est possible d'ajuster le tambour pour différentes largeurs de pneumatique à fabriquer, en pratique, ces possibilités de réglage sont extrêmement limitées. De plus, l'épaulement du tambour n'offre un support suffisamment continu et rigide que pour une seule cote d'écartement axial. En effet, le coude radialement supérieur des biellettes ne peut être aligné avec l'extrémité des traverses que pour un et un seul écartement relatif des manchons portant les biellettes. Là encore, un tel tambour doit être considéré comme ne se prêtant qu'à la fabrication d'une seule dimension de pneumatique.

Le brevet FR 1 492 577 décrit un tambour dont la conception s'attache en particulier à réaliser un appui rigide de bonne continuité à l'épaulement. Cependant, les flancs d'un tel tambour, parce qu'ils ne sont constitués que par une paroi pneumatique, n'offre pas une référence suffisamment précise pour la confection d'un pneu.

La présente invention vise à proposer un tambour aussi simple que possible, dont les mouvements nécessaires pour l'ensemble des opérations de confection puissent à la fois être exécutés sans peine manuellement, ou puissent être automatisés très aisément.

Un autre objectif de la présente invention consiste à proposer un tambour sur lequel on puisse fabriquer un grand nombre de dimensions différentes de pneumatiques, en ne requérant que des réglages simples à exécuter et en n'imposant qu'un minimum de changement d'accessoires pour passer d'une dimension de pneumatique une autre.

Un autre objectif de l'invention est de proposer un tel tambour qui offre un support suffisamment ferme et continu sur lequel on puisse former avec grande précision les bourrelets de pneumatique. Plus précisément, l'objectif de l'invention est de proposer un tambour sur lequel un bourrelet d'assez grande hauteur puisse être fabriqué, dans une orientation proche de l'orientation finale du pneu vulcanisé, afin d'éviter que le bourrage sur tringle ne subisse des pliures et des déformations au cours des conformations inhérentes à la fabrication du pneu sur tambour.

Selon la présente invention, le tambour de confection de pneumatique, ayant un arbre central pouvant être monté sur un bâti-mandrin, comporte :
- deux plateaux pouvant coulisser axialement sur l'arbre central l'un par rapport à l'autre ;
- sur chaque plateau, un groupement de bielles ayant chacune d'un côté un axe d'articulation et de l'autre côté une tête, lesdites bielles étant montées sur chaque plateau de façon à ce que lesdits axes d'articulation soient tous compris dans un même plan perpendiculaire à l'axe de l'arbre central, et à égale distance de celui-ci ;
- des moyens de commande pour basculer lesdites bielles autour de leur axe d'articulation, entre une position escamotée et une position de confection, ladite position de confection des bielles dans chacun des plateaux étant symétrique d'un plateau à l'autre ; - une enveloppe recouvrant l'ensemble des bielles de chaque groupement, ancrée sur chaque plateau de façon à définir, pour chacun des groupements, une enceinte étanche, et des moyens permettant de mettre ladite enceinte en dépression.

Dans un mode préféré de réalisation de l'invention, on utilise un manchon amovible renforcé pour obtenir une surface sensiblement cylindrique et suffisamment ferme servant de surface de référence sur laquelle on dépose les différents produits constituant le pneumatique.

Dans ce dernier cas, l'invention propose aussi un procédé de fabrication d'une ébauche crue de pneumatique, comprenant les étapes suivantes :
- utiliser la configuration initiale suivante pour le tambour : les bielles en position escamotée, les plateaux axialement rapprochés ;
- déposer le manchon sur le tambour, de façon à ce qu'il chevauche l'ensemble des belles de chaque plateau ;
- établir la position de confection des bielles ;
- écarter axialement les plateaux l'un par rapport à l'autre jusqu'à une cote de confection prédéterminée ;
- construire ladite ébauche en déposant les constituants voulus à l'endroit convenable sur ledit manchon ;
- rapprocher axialement lesdits plateaux ;
- établir la position escamotée des bielles et enlever l'ébauche de pneumatique hors du tambour ;
- extraire ledit manchon amovible de l'intérieur de ladite ébauche et le récupérer pour la fabrication suivante.

L'invention sera parfaitement comprise grâce à la consultation de la description suivante, illustrant à l'aide des figures jointes et de façon non limitative, deux modes de réalisation d'un tambour selon l'invention, permettant de saisir tous les avantages que l'on peut en escompter.
La figure 1 est une coupe radiale montrant un tambour dans quatre configurations différentes ;
la figure 2 illustre un détail du tambour ;
les figures 3 à 8 illustrent six phases successives des mouvements du tambour ;
les figures 9 et 10 illustrent une variante du tambour.

Le tambour 1 comporte un arbre central 2 dessiné pour pouvoir être monté sur un bâti 10 capable de le supporter en porte-à-faux, tout en lui conférant les mouvements nécessaires, et fournissant les fluides nécessaires à son fonctionnement, via des commandes pneumatiques appropriées et des canalisations (non représentées) incorporées à l'intérieur de l'arbre central 2. Le tambour 1 est composé de deux sous-ensembles G et D sensiblement symétriques, portés par deux plateaux 3. Chacun des plateaux 3 peut librement glisser axialement sur l'arbre central 2, et est immobilisé en rotation par rapport à celui-ci grâce aux clavettes 20.

Chaque plateau 3 supporte un groupe de bielles 4 (pour fixer les idées de l'ordre de 40 à 100 bielles par plateau 3) articulés sur le plateau. Les bielles 4 comportent chacune d'un côté un axe d'articulation 40 et de l'autre une tête 41. Chaque bielle 4 comporte également un levier 42 la prolongeant au delà de l'axe d'articulation 40 du côté opposé à la tête 41. Toutes les bielles 4 sont montées sur chaque plateau 3 de manière à se disposer toutes de la même façon à l'intérieur d'un groupement, en décrivant un mouvement chacune dans le plan radial qui la comprend. Leurs axes d'articulation 40 sont disposés à égale distance de l'arbre 2, c'est à dire sur un même cercle auquel ils sont tangents. Tous les leviers 42 sont insérés dans l'espace entre deux couronnes 30, 31, sur chacun des plateaux 3. La couronne 30 est directement solidaire du plateau 3, tandis que la couronne 31 est montée sur un piston 32 concentrique à l'arbre 2. Les pistons 32 sont commandés par un fluide acheminé par la canalisation 320.

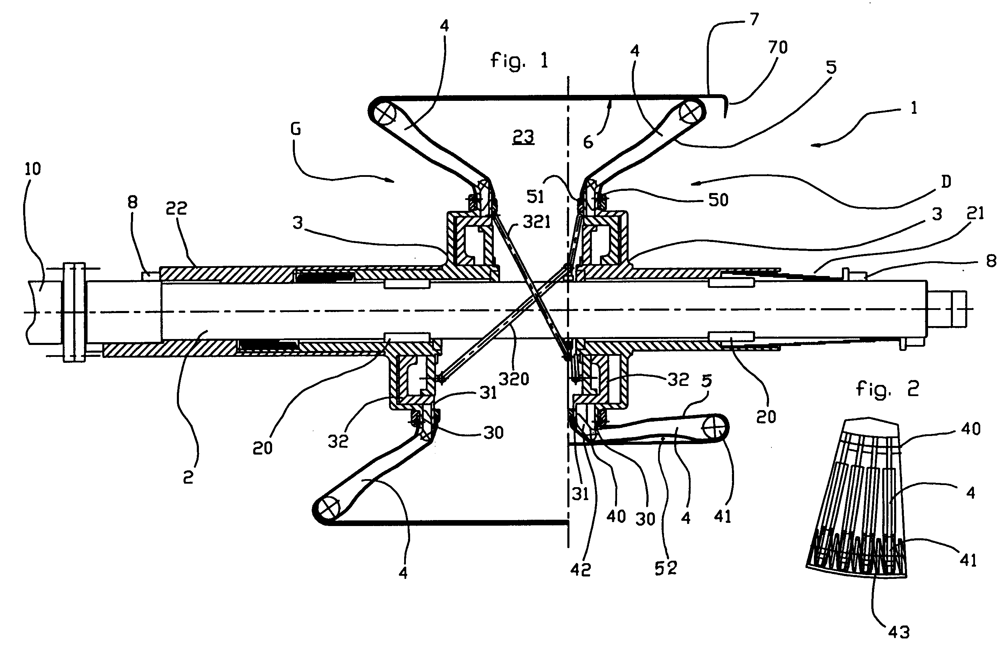

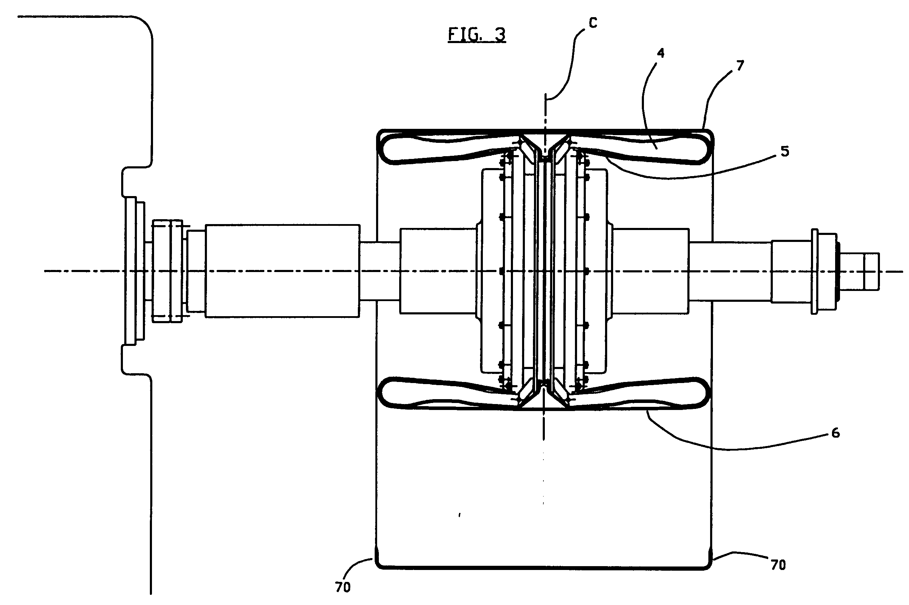

Un ressort 43 est monté sur toutes les têtes 41 des bielles de chacun des ensembles G et D (voir figure 2). Le ressort 43 est un ressort spiral annulaire, à spires jointives au repos. Il comporte un nombre de spires exactement multiple du nombre de bielles 4 d'un ensemble G ou D respectivement. De préférence, il comporte entre deux et quatre fois autant de spires que de bielles 4. Ceci permet d'assurer une bonne continuité du rebord circonférentiel défini par l'ensemble des têtes 41, pour toute position radiale de celles-ci. Chaque tête 41 est insérée dans une spire du ressort 43, à des endroits régulièrement répartis tout le long du ressort 43, d'où la nécessité que le nombre de spires soit un multiple du nombre de bielles 4. On notera encore que le ressort 43 a aussi pour fonction d'assurer un rappel des bielles 4 vers la position représentée dans le quadrant inférieur droit de la figure 1.

Par ailleurs, chaque groupement de bielle 4 est enfermé dans une enveloppe 5 (voir aussi figure 3) comportant deux talons 50, 51 pour son montage respectivement sur chacune des deux couronnes 30, 31. Une canalisation pneumatique 321 permet de faire le vide à l'intérieur de chaque enveloppe 5. Grâce à cela, l'enveloppe 5 est plaquée contre les bielles 4. Ainsi, chaque groupement offre une surface relativement ferme et continue, sur laquelle on peut bâtir avec précision un bourrelet de pneumatique.

Dans une première variante, le tambour comporte des moyens d'étanchéité entre les bielles de chacun des plateaux et une canalisation pneumatique capable d'amener de l'air comprimé axialement entre lesdits plateaux afin de provoquer l'écartement axial relatif des plateaux l'un par rapport à l'autre lorsqu'un article étanche coiffe de façon étanche les deux groupements de bielles. Pour réaliser cette étanchéité, une membrane 6 est par exemple soudée à chacune des deux enveloppes 5 environ au milieu de celles-ci, c'est à dire à l'endroit où l'enveloppe contourne les têtes 41 des bielles 4. Enfin, l'arbre est pourvu d'un orifice débouchant en partie centrale (non représenté), permettant de gonfler et dégonfler une cavité intérieure 23, délimitée par les ensembles G et D, l'étanchéité étant assurée par les enveloppes 5 et la membrane 6.

La membrane 6 et les enveloppes 5 sont réalisées par exemple en caoutchouc homogène, non renforcé, et sont étanches à l'air, ainsi que la liaison de la membrane 6 sur les enveloppes 5. De préférence, la fabrication en est assurée sur un cylindre au diamètre des talons 50, 51, de sorte qu'elles ne peuvent grandir en diamètre que mises sous tension par élévation de la pression de gonflage.

Le tambour comporte un manchon 7 essentiellement cylindrique, flanqué de deux ailes latérales 70 orientées radialement, recourbées vers l'intérieur. Le manchon 7 est amovible. Il est conçu pour former un anneau recouvrant la membrane 6. Le manchon 7 est constitué d'un matériau caoutchouteux renforcé par des fils disposés à zéro degré, ou à un angle très proche de zéro degré, par exemple en spirale, d'une nature telle qu'ils bloquent le développement circonférentiel dudit manchon à une valeur prédéterminée.

Ce manchon 7 sert de référence de confection pour les pneumatiques à fabriquer. C'est un accessoire du tambour. Comme on le comprendra dans la suite, le même manchon peut convenir pour plusieurs dimensions de pneumatique à fabriquer, au moins à l'intérieur d'une gamme d'écartements entre tringles, c'est à dire à l'intérieur d'une gamme de longueur curviligne de la carcasse d'une tringle à l'autre.

C'est le manchon 7 qui impose le diamètre de la surface de référence pour l'assemblage du pneumatique. C'est la raison pour laquelle il est conçu de façon à imposer au tambour un développement maximal donné, en coopérant avec les autres éléments du tambour comme cela sera explicité ci-dessous. Le manchon 7 est fabriqué sur une forme lui conférant l'allure qu'il a dans le quadrant supérieur droit de la figure 1. Il comporte des fils de renforcement, disposés à zéro degré uniquement dans la partie cylindrique, et soit à zéro degré soit à angles croisés dans les ailes 70. Le manchon 7 est par exemple fabriqué sur une forme cylindrique à épaulements, dont le diamètre maximal est fixé à la valeur requise, et est renforcé par des fils à zéro degré inextensibles. Le renforcement des ailes 70 doit plus généralement être suffisant pour que celles-ci ne puissent pas passer par dessus les têtes 41, sous l'effet de la tension du manchon 7 dans la direction axiale.

Notons encore que la membrane 6 et/ou le manchon 7 sont conçus de façon à pouvoir glisser facilement l'un par rapport à l'autre, au moins dans la direction axiale. Par exemple, les surfaces concernées sont traitées pour être anti-collantes, ou l'une d'entre elles au moins est revêtue d'un tissu biélastique comme le tissu "Milliken D022". Ce type de tissu n'est pas considéré comme renforçant la membrane 6. De plus, il convient de préférence qu'il y ait, entre la membrane 6 et le manchon 7, des rainures (non représentées) ou toute autre disposition d'effet équivalent, permettant de drainer l'air afin d'éviter la formation de poche d'air entre membrane 6 et manchon 7 au cours du fonctionnement du tambour. On peut aussi revêtir d'un tel tissu biélastique la surface extérieure du manchon 7, afin que les produits en caoutchouc cru déposés lors de la confection d'un pneumatique ne collent pas sur ledit manchon 7. En variante, le manchon 7 pourrait assurer l'étanchéité entre les groupements de bielles 4, à la place de la membrane 6.

Enfin, parmi les principaux organes du tambour, on trouve encore deux écrous 8 de réglage de l'écartement axial maximal des plateaux 3 l'un par rapport à l'autre. Ces écrous 8 constituent une butée limitant la course axiale des plateaux 3. Le réglage de ces écrous 8 est manuel et les écrous 8 comportent de préférence une vis de pression permettant de les immobiliser en rotation. En variante, ces écrous 8 peuvent être commandés électriquement par exemple par un système à vis et écrous à pas contraires.

On voit encore qu'une gaine 21 de protection recouvre l'arbre central 2 de part et d'autre de chaque plateau 3 et axialement à l'extérieur de ceux-ci. Cette gaine évite l'encrassement de l'arbre 2, ce qui nuirait au bon coulissement des plateaux 3 sur celui-ci. On voit également une entretoise 22 disposée entre l'écrou de réglage 8 et le plateau 3 du côté gauche du tambour. D'autres détails de construction apparaîtront mieux à la lumière de la description du fonctionnement du tambour qui va suivre.

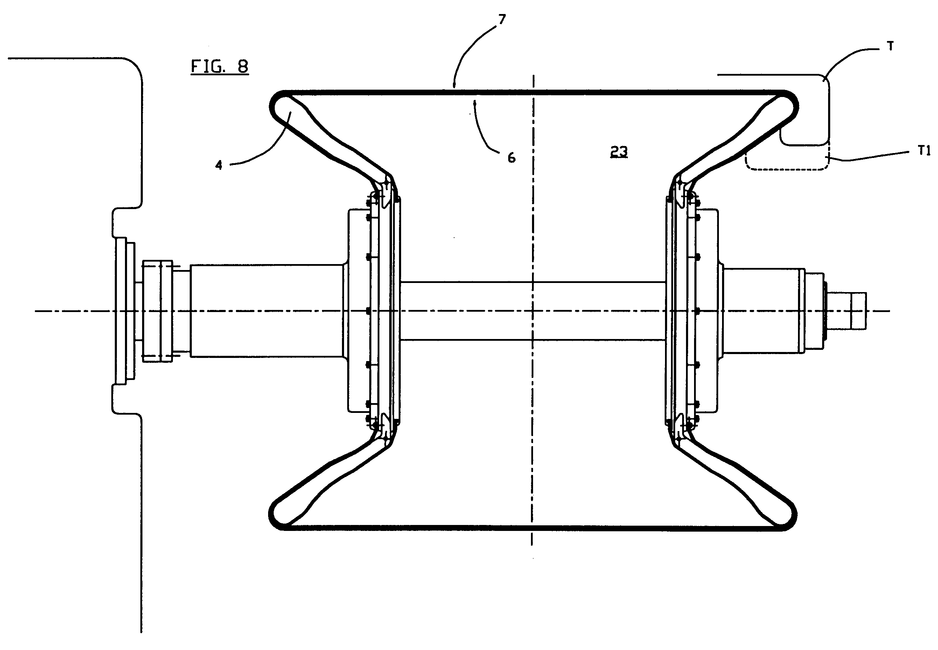

Notons que le tambour illustrant l'invention dans le présent mémoire est conçu tout particulièrement en vue d'une utilisation pour confectionner de gros pneumatiques à carcasse croisée. Il peut éventuellement être utilisé sur une petite plage de diamètres au seat différents : cela revient à disposer le bourrelet du pneumatique à différentes hauteurs sur le flanc du tambour (voir à la figure 8 le bourrelet T tracé en trait continu ou le bourrelet T1 tracé en trait discontinu).

Examinons maintenant le réglage du tambour. Pour un pneumatique déterminé, on ajuste l'entre-tringles de confection en réglant l'écartement limite entre plateaux 3. A cette fin, on amène chacun des écrous 8 de réglage à la position adéquate, puis on verrouille cette position. On a ainsi réglé la butée contrôlant l'écartement entre plateaux 3.

Pour le fonctionnement du tambour, on consultera plus particulièrement les figures 3 à 8. Elles montrent, dans l'ordre de la confection, les allures successives que prend le tambour. Au départ, en l'absence de toute pression ou le cas échéant dépression dans les enveloppes 5, dans la chambre limitée par la membrane 6, et dans chacun des pistons 32, par le rappel élastique du ressort 43, les bielles 4 prennent une position escamotée, dans laquelle elles sont parallèles à l'axe de l'arbre central 2, et les plateaux 3 s'adossent l'un à l'autre.

Au passage, notons que la position axiale exacte sur l'arbre 2, de l'ensemble des pièces portées par les plateaux 3, est indifférente, bien entendu à l'intérieur de certaines limites imposées par la position des écrous de réglage 8, et sans que chaque plateau puisse franchir le centre de l'arbre, repéré par le trait C à la figure 3. Notons que la configuration d'un tel tambour peut ne pas toujours être symétrique pendant les changements de configuration, notamment puisqu'aucun dispositif mécanique positif ne vient contrôler la position axiale de chacun des plateaux 3 sur l'arbre central 2. En revanche, pendant la fabrication d'un pneumatique, le tambour est toujours dans une configuration rigoureusement contrôlée, par contact des plateaux 3 sur des butées et par contrôle positif de l'inclinaison des bielles 4.

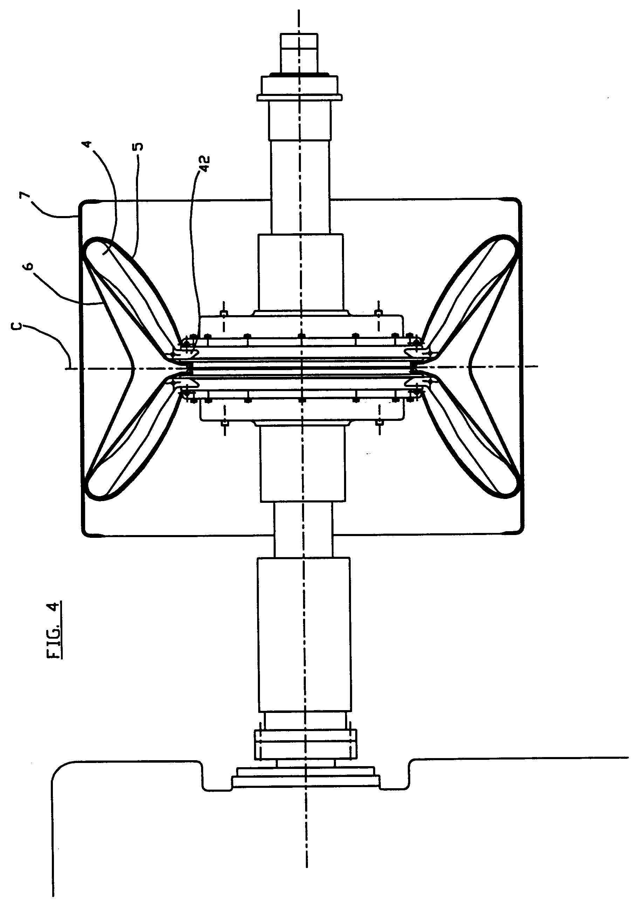

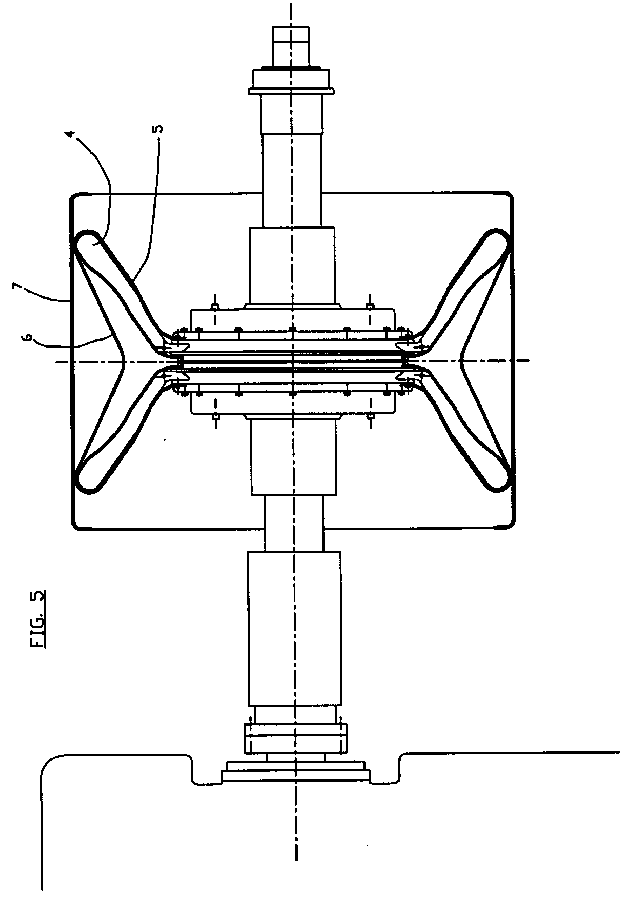

Revenons à l'utilisation du tambour. On commence par disposer le manchon 7 sur le tambour 1 proprement dit, de façon à ce que les ailes latérales 70 chevauchent le tambour de part et d'autre des deux groupements de belles 4. Sous l'effet de la gravité, le manchon reste suspendu sur le tambour (figure 3). Par la commande pneumatique ad hoc, on actionne les pistons 32 pour relever les bielles 4 (figure 4). Ensuite, on fait le vide à l'intérieur des enveloppes 5 (figure 5), ce qui permet de disposer d'une surface de confection de forme précise sur les flancs du tambour.

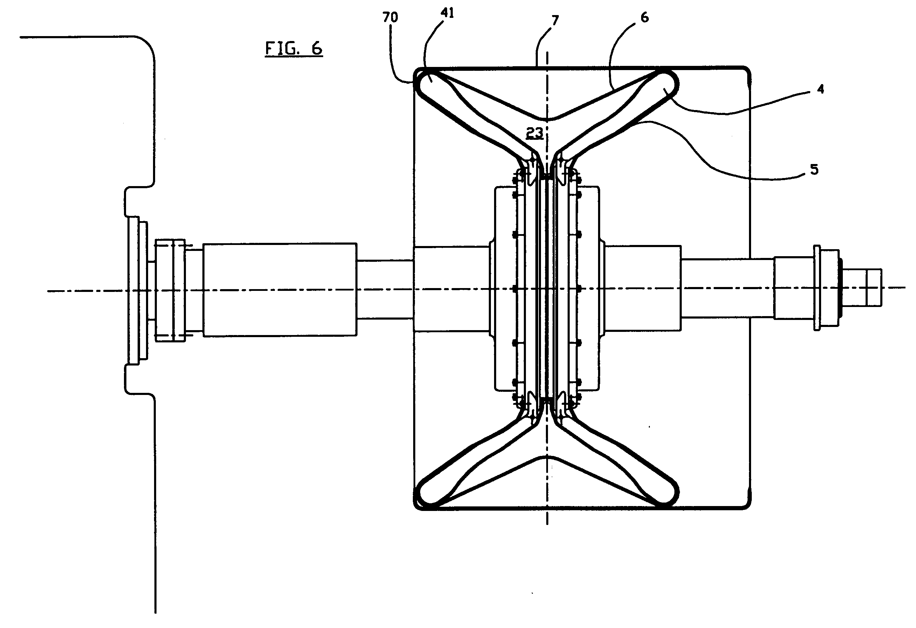

Eventuellement, on amène ensuite en butée d'un côté l'une des ailes 70 du manchon 7 (voir figure 6). Cette opération est facultative, et n'a d'autre but que d'assurer une mise en appui du manchon 7 rigoureusement identique sur toute la périphérie définie par les têtes 42 et le ressort 43 du sous-ensemble G.

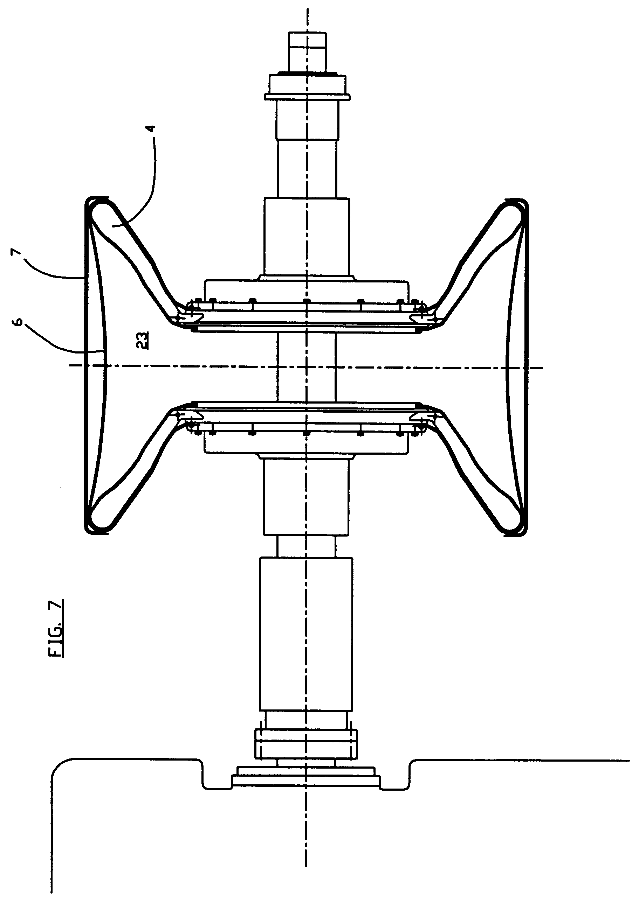

On gonfle progressivement la cavité intérieure 23 délimitée par les sous-ensembles G et D et par la membrane 6. Ceci provoque l'écartement des plateaux 3 (voir figure 7) jusqu'à la butée matérialisée par les écrous de réglage 8 (voir figure 8). Notons que l'expansion radiale de la membrane 6 est impossible car elle reste contenue par le manchon 7. En revanche, l'étirage axial tant du manchon 7 que de la membrane 6 reste libre : il suffit de vaincre le rappel élastique de la matrice en caoutchouc constituant ces éléments. On comprend ici que le renforcement croisé des ailes 70 a pour fonction d'en assurer le bon maintien sur chacun des rebords périphériques que constituent les têtes 41, habillées par les enveloppes 5 et la membrane 6.

On dispose ainsi d'une surface de référence suffisamment ferme et de cotes suffisamment précises pour pouvoir confectionner un pneumatique. A titre d'illustration, une pression de gonflage de l'ordre de 0.5 bar est tout à fait suffisante. On voit donc que la pression interne n'atteint pas un niveau qui risquerait d'être dangereux, compte tenu du volume de ladite cavité intérieure 23.

Après confection, on dégonfle la cavité intérieure 23, ce qui ramène les plateaux 3 dans une position proche de celle de la figure 6. Puis on ramène les enveloppes 5 à la pression atmosphérique, et on fait revenir les pistons 32 dans leur position antérieure. Le tambour revient dans la configuration de la figure 3.

Dans un tel tambour, à position axiale relative des axes d'articulation 40 des bielles 4 de chaque groupement inchangée, le basculement desdites bielles 4 de la position de confection vers la position escamotée augmente l'écartement entre les têtes 41 de bielle 4. Cependant, la compacité des organes mécaniques est telle que les plateaux peuvent être fortement rapprochés l'un de l'autre. Le pneumatique cru peut être enlevé du tambour, car l'écartement axial entre têtes de bielle est suffisamment faible et le diamètre maximal du tambour est revenu à un niveau inférieur au diamètre mesuré sous le bourrelet du pneumatique (diamètre au seat). Au besoin, pour faciliter cette opération, on fait le vide à l'intérieur de la cavité intérieure 23.

Lorsque l'on dégage le pneumatique hors du tambour, le manchon 7 reste en général à l'intérieur du pneumatique. On peut alors l'en extraire manuellement, afin de le réemployer pour la prochaine confection.

Le tambour illustrant la présente invention ne montre qu'une application particulière de celle-ci. L'homme du métier aura compris que, pour d'autres applications, le tambour pourrait avoir une allure quelque peu différente, sans pour autant sortir du cadre de la présente invention. Ainsi, par exemple, dans le tambour illustré, les bielles forment un angle d'environ 45° par rapport à l'axe de l'arbre central. Cette disposition n'est cependant nullement limitative. On peut ajouter que, pour couvrir la très grande majorité des applications que l'on peut envisager, en position de confection, les bielles formeront par rapport à l'axe de l'arbre central un angle prédéterminé compris entre 45° et 90°, la tête de chaque bielle 4 étant disposée par rapport audit arbre à une distance supérieure à la distance entre l'axe d'articulation et ledit arbre.

De façon générale, on peut noter que, pour le mode de commande des bielles 4 faisant appel à un lever 42 comme décrit, ledit levier 42 est orienté par rapport à ladite bielle 4 de telle sorte que, lorsque ledit levier 42 est disposé perpendiculairement à l'axe dudit arbre central, ladite belle 4 forme ledit angle prédéterminé. Dans cette variante, les moyens de commande pour basculer les bielles 4 comportent essentiellement, pour chaque plateau 3, deux couronnes annulaires, la première 30 solidaire dudit plateau, la seconde 31 axialement mobile par rapport à la première, les couronnes enserrant lesdits leviers 42, chaque enveloppe 5 étant montée sur lesdites couronnes 30, 31.

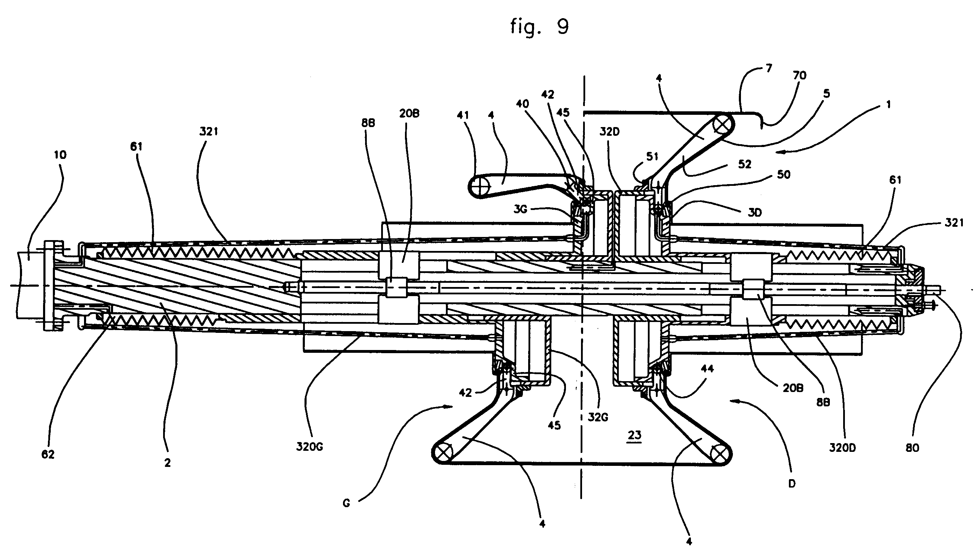

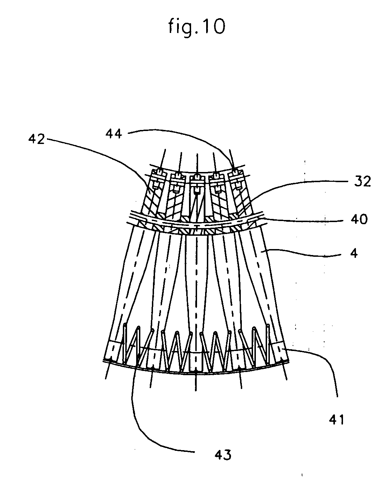

Une autre variante du tambour est illustrée aux figures 9 et 10. Ce tambour se distingue de la réalisation précédente en plusieurs points. L'un 3D des plateaux est monté fixe axialement, seul le plateau 3G étant coulissant axialement pendant le cycle de fabrication d'un pneumatique. Bien entendu, l'adaptation du tambour à différentes largeurs de pneumatiques à fabriquer impose de déplacer axialement le plateau 3D d'une part, et la butée limitant le coulissement du plateau 3G d'autre part. Le basculement des bielles 4 passe par un déplacement parallèle à l'axe du tambour de l'axe d'articulation 40 alors que l'extrémité du levier 42 correspondant est maintenue fixe axialement. Enfin, le tambour ne comporte pas de membrane 6. Toutes ces différences, qui peuvent bien sûr être utilisées ensemble ou séparément, sont explicitées ci-dessous.

On aperçoit à la figure 9 deux écrous 8B montés sur un arbre 80 comportant des zones filetées à pas contraires. Des clavettes 20B sont solidaires de ces écrous 8B. Les clavettes 20B de droite immobilisent le plateau 3D non seulement en rotation (comme le font les clavettes 20 de la variante précédente), mais aussi axialement. Les clavettes 20B de gauche, engagées sur le plateau 3G dans une lumière, immobilisent ledit plateau 3G en rotation, tout en laissant un degré de liberté de coulissement. En agissant sur l'arbre 80, on règle l'écartement relatif des écrous 8B, et par à même, on règle la valeur limite de l'écartement relatif entre plateaux 3G et 3D.

Un galet 44 est monté à l'extrémité de chaque lever 42. Pour chacun des plateaux 3G et sur 3D, des fourches 45 recevant chaque galet 43 sont montées solidairement de chaque plateau 3G et 3D, et les axes d'articulation 40 des belles 4 sont montés sur le piston 32G ou 32D respectivement. Ainsi, le basculement des bielles 4 se fait en déplaçant axialement (c'est à dire parallèlement à l'axe du tambour) l'axe d'articulation 40 par rapport aux fourches 45. La présence du galet 44 facilite ce mouvement. Les canalisations d'air 321 permettent de mettre chaque enveloppe 5 en dépression, afin de plaquer celles-ci contre les bielles 4 pour la raison expliquée ci-dessus. Enfin, des canalisations d'air 320g et 320d permettent la commande des pistons 32G et 32D séparément pour chacun des plateaux 3G et 3D.

Un soufflet 61 recouvre l'arbre du tambour à chacune de ses extrémités, dans le prolongement direct des plateaux 3G et 3D. Du côté gauche, le soufflet 61 agit comme un vérin 62 permettant, lorsqu'il est mis en dépression, d'exercer sur le plateau 3G une traction causant un écartement relatif entre plateaux 3G et 3D, donc entre chacun des groupements de bielles 4. Cette disposition permet de supprimer la membrane 6, comme on le comprendra grâce à l'explication du fonctionnement ci-dessous.

Le fonctionnement du tambour conçu selon la seconde variante n'est décrit que dans la mesure où une variante d'utilisation est proposée. En l'absence d'étanchéité entre les groupements de bielles 4, l'écartement initial (étape représentée à la figure 7 pour la première variante) des plateaux résulte ici de la traction du vérin 62, au moins tant que le contact avec un autre moyen d'étanchéité, comme le manchon 7, n'est pas assuré. Lorsque les plateaux 3G et 3D se sont suffisamment écartés pour que les ailes latérales 70 du manchon 7 soient bien en appui sur les têtes 41 de bielle, le tambour présente alors une cavité intérieure 23 étanche. La poursuite et/ou le maintien en position écartée est assuré par la mise en pression de cette cavité intérieure 23 comme expliqué pour la première variante.

Il est possible, pour enlever une ébauche de pneumatique du tambour, de manoeuvrer le basculement des bielles 4 vers la position horizontale en deux temps successifs et non pas simultanément. On commence par actionner le piston 32G. On dégage ainsi d'abord le bourrelet de gauche. On actionne ensuite le piston 32D, ce qui permet d'évacuer l'ébauche de pneumatique par la droite. Cette disposition permet, à encombrement de tambour donné, d'évacuer des ébauches plus larges.

Le tambour selon l'invention offre une référence précise de confection tout en étant fort compact. Il permet notamment de loger aisément des membranes de retroussage et/ou des dispositifs de pose de tringle ou bourrage tringle de part et d'autre des plateaux, car l'espace axialement à l'extérieur des leviers 4 est libre de tout organe mécanique. La conception proposée peut très facilement être adaptée à différentes situations. C'est en choisissant une disposition adéquate dudit angle prédéterminé et de la longueur desdites bielles que l'on peut adapter le tambour au type de pneumatique que l'on souhaite fabriquer. Un tel tambour peut servir de tambour semi noyau de premier temps, pour confectionner une ébauche d'un pneumatique à carcasse radiale. Dans ce cas, on peut noter à titre d'exemple que ledit angle prédéterminé atteindra en général une valeur assez proche de 90°. L'homme du métier pourra facilement concevoir d'autres modifications ou adaptations, en fonction de l'application précise à laquelle il destine le tambour qu'il concevra à la lumière de la présente invention.

## Revendications

1. Tambour (1) de confection de pneumatique, ayant un arbre central (2) pouvant être monté sur un bâti-mandrin (10), comportant :
- deux plateaux (3) pouvant coulisser axialement sur l'arbre central (2) l'un par rapport à l'autre;
- sur chaque plateau (3), un groupement de bielles (4) ayant chacune d'un côté un axe d'articulation (40) et de l'autre côté une tête (41), lesdites bielles (4) étant montées sur chaque plateau (3) de façon à ce que lesdits axes d'articulation (40) soient tous compris dans un même plan perpendiculaire à l'axe de l'arbre central (2), et à égale distance de celui-ci ;
- des moyens de commande pour basculer lesdites bielles (4) autour de leur axe d'articulation (40), entre une position escamotée et une position de confection, ladite position de confection des belles (4) dans chacun des plateaux (3) étant symétrique d'un plateau à l'autre ;
- une enveloppe (5) recouvrant l'ensemble des belles (4) de chaque groupement, ancrée sur chaque plateau (3) de façon à définir, pour chacun des groupements, une enceinte (52) étanche, et des moyens permettant de mettre ladite enceinte (52) en dépression.

2. Tambour selon la revendication 1, dans lequel, en position escamotée, les bielles (4) sont sensiblement parallèles à l'axe de l'arbre central (2).

3. Tambour selon l'une des revendications 1 ou 2, dans lequel, en position de confection, les belles (4) forment par rapport à l'axe de l'arbre central (2) un angle prédéterminé compris entre 45° et 90°, la tête (41) de chaque belle (4) étant disposée par rapport audit arbre (2) à une distance supérieure à la distance entre l'axe d'articulation (40) et ledit arbre. (2).

4. Tambour selon la revendication 3, dans lequel, à position axiale relative des axes d'articulation (40) des bielles (4) de chaque groupement inchangée, le basculement desdites bielles (4) de la position de confection vers la position escamotée augmente l'écartement entre les têtes (41) de bielle (4).

5. Tambour selon la revendication 1, comportant des moyens d'étanchéité pour former une cavité (23) étanche entre les groupements de bielles (4) de chacun des plateaux (3) et une canalisation pneumatique capable d'amener de l'air comprimé axialement entre lesdits plateaux (3) afin de provoquer l'écartement axial relatif des plateaux (3) l'un par rapport à l'autre lorsqu'un article étanche coiffe de façon étanche les deux groupements de bielles (4).

6. Tambour selon la revendication 5, dans lequel lesdits moyens d'étanchéité formant une cavité étanche comprenant une membrane (6) soudée de part et d'autre à chacune des enveloppes (5), sensiblement à l'endroit où celles-ci recouvrent la tête (41) desdits bielles (4).

7. Tambour selon la revendication 6, dans lequel la membrane (6) est constituée d'un matériau caoutchouteux isotrope, non renforcé, et comprenant en outre un manchon (7) amovible, formant un anneau continu capable de recouvrir ladite membrane (6), ledit manchon comportant des ailes latérales (70) recourbées vers l'intérieur, pour recouvrir au moins légèrement les têtes (41) des bielles (4), ledit manchon (7) étant constitué d'un matériau caoutchouteux renforcé par des fils disposés à zéro degré, d'une nature telle qu'ils bloquent le développement circonférentiel dudit manchon à une valeur prédéterminée.

8. Tambour selon l'une des revendications 1 à 7, comportant des moyens assurant une répulsion élastique entre lesdits plateaux (3).

9. Tambour selon l'une des revendications 1 à 8, comportant un ressort (43) monté sur toutes les têtes (41) de bielle (4) pour assurer une plus grande continuité du rebord circonférentiel défini par les têtes (41) de belle (4).

10. Tambour selon l'une des revendications 1 à 9, dans lequel chaque bielle (4) est prolongée du côté opposé à l'axe d'articulation par un lever (42) solidaire de ladite bielle (4), ledit levier (42) étant orienté par rapport à ladite bielle (4) de telle sorte que, lorsque ledit levier (42) est disposé perpendiculairement à l'axe dudit arbre central (2) lorsque ladite belle (4) forme ledit angle prédéterminé, et dans lequel lesdits moyens de commande comportent essentiellement, pour chaque plateau (3), deux couronnes annulaires (30, 31), la première solidaire dudit plateau (3), la seconde axialement mobile par rapport à la première, les couronnes enserrant lesdits leviers (42), chaque enveloppe (5) étant montée sur lesdites couronnes (3).

11. Tambour selon l'une des revendications 1 à 9, dans lequel chaque bielle (4) est prolongée du côté opposé à l'axe d'articulation par un levier (42) solidaire de ladite bielle (4), ledit lever (42) étant orienté par rapport à ladite bielle (4) de telle sorte que, lorsque ledit levier (42) est disposé perpendiculairement à l'axe dudit arbre central (2) lorsque ladite bielle (4) forme ledit angle prédéterminé, un galet (44) étant monté à l'extrémité de chaque lever (42) et dans lequel lesdits moyens de commande comportent essentiellement, pour chaque plateau (3), un ensemble de fourches (45) recevant chaque galet (44), commandant le basculement des bielles par un déplacement parallèle à l'axe des dites fourches (45).

12. Procédé de fabrication d'une ébauche crue de pneumatique, en utilisant un tambour tel que celui de la revendication 7, comprenant les étapes suivantes :
- utiliser la configuration initiale suivante pour le tambour : les bielles en position escamotée, les plateaux axialement rapprochés ;
- déposer le manchon sur le tambour, de façon à ce qu'il chevauche l'ensemble des bielles de chaque plateau ;
- établir la position de confection des bielles ;
- écarter axialement les plateaux jusqu'à une cote de confection prédéterminée ;
- construire ladite ébauche en déposant les constituants voulus à l'endroit convenable sur ledit manchon ;
- rapprocher axialement lesdits plateaux ;
- établir la position escamotée des bielles et enlever l'ébauche de pneumatique hors du tambour ;
- extraire ledit manchon amovible de l'intérieur de ladite ébauche et le récupérer pour la fabrication suivante.

13. Procédé selon la revendication 12, dans lequel on établit la position escamotée des bielles d'abord pour un seul groupement, on enlève l'ébauche du côté correspondant, puis on établit la position escamotée des belles pour l'autre groupement, et on termine l'enlèvement de l'ébauche.

## Claims

1. A building drum (1) for a tyre, having a central shaft (2) which can be mounted on a mandrel holder (10), comprising:
- two plates (3) which can slide axially on the central shaft (2) relative to each other;
- on each plate (3), a group of rods (4) each having on one side an axis of articulation (40) and on the other side a head (41), said rods (4) being mounted on each plate (3) in such a way that said axes of articulation (40) are all included in one and the same plane perpendicular to the axis of the central shaft (2), and equidistant from the latter;
- means for controlling the pivoting of said rods (4) around their axis of articulation (40), between a retracted position and a building position, said building position of the rods (4) in each of the plates (3) being symmetrical from one plate to the other;
- a sleeve (5) covering all the rods (4) of each group and anchored on each plate (3) in such a way as to define, for each of the groups, an airtight enclosure (52), and means allowing said enclosure (52) to be placed under partial vacuum.

2. A drum according to claim 1, in which, in retracted position, the rods (4) are substantially parallel to the axis of the central shaft (2).

3. A drum according to one of claims 1 or 2, in which, in the building position, the rods (4) form a predetermined angle of between 45° and 90° relative to the axis of the central shaft (2), the head (41) of each rod (4) being positioned relative to said shaft (2) at a distance greater than the distance between the axis of articulation (40) and said shaft (2).

4. A drum according to claim 3, in which, with the relative axial position of the axes of articulation (40) of the rods (4) of each group unchanged, the pivoting of said rods (4) from the building position towards the retracted position increases the distance between the heads (41) of the rods (4).

5. A drum according to claim 1, comprising sealing means to form an airtight cavity (23) between the groups of rods (4) of each of the plates (3) and a pneumatic conduit capable of conveying compressed air axially between said plates (3) in order to cause the relative axial separation of the plates (3) relative to each other when an airtight item covers the two groups of rods (4) in an airtight manner.

6. A drum according to claim 5, in which said sealing means forming an airtight cavity comprise a membrane (6) joined on both sides to each of the sleeves (5), at substantially the location where the sleeves cover the head (41) of said rods (4).

7. A drum according to claim 6, in which the membrane (6) is composed of an isotropic rubbery material, non-reinforced, and also comprising a removable mantle (7), forming a continuous ring capable of covering said membrane (6), said mantle comprising lateral flanges (70) curved towards the inside, to cover at least slightly the heads (41) of the rods (4), said mantle (7) being composed of a rubbery material reinforced by wires positioned at zero degrees, in such a way that they stop circumferential expansion of said mantle at a predetermined value.

8. A drum according to one of claims 1 to 7, comprising the means for providing elastic repulsion between said plates (3).

9. A drum according to one of claims 1 to 8, comprising a spring (43) mounted on all the heads (41) of the rods (4) to provide greater continuity of the circumferential edge section defined by the heads (41) of the rods (4).

10. A drum according to one of claims 1 to 9, in which each rod (4) is extended on the side opposite the axis of articulation by a lever (42) fixed to said rod (4), said lever (42) being oriented relative to said rod (4) in such a way that, when said lever (42) is positioned perpendicular to the axis of said central shaft (2) when said rod (4) forms said predetermined angle, and in which said means of control essentially comprise, for each plate (3), two annular crowns (30, 31), the first fixed to said plate (3), the second axially mobile relative to the first, the crowns holding tightly said levers (42), each sleeve (5) being mounted on said crowns (3).

11. A drum according to one of claims 1 to 9, in which each rod (4) is extended on the side opposite the axis of articulation by a lever (42) fixed to said rod (4), said lever (42) being oriented relative to said rod (4) such that, when said lever (42) is positioned perpendicular to the axis of said central shaft (2) when said rod (4) forms said predetermined angle, a roller (44) being mounted on the end of each lever (42) and in which said means of control essentially comprise, for each plate (3), a group of forks (45) receiving each roller (44), controlling the pivoting of the rods by a movement parallel to the axis of said forks (45).

12. A process of production of a raw tyre blank, by using a drum such as that of claim 7, comprising the following stages:
- using the following initial configuration for the drum: the rods in retracted position, the plates brought close together axially;
- placing the mantle on the drum, such that it covers all the rods of each plate;
- establishing the building position of the rods;
- separating the plates axially relative to each other up to a predetermined building distance;
- constructing said blank by placing the desired components in the appropriate location on said mantle;
- bringing said plates together axially;
- establishing the retracted position of the rods and removing the tyre blank from the drum;
- extracting said removable mantle from the interior of said blank and recovering it for the next production operation.

13. A process according to claim 12, in which the retracted position of the rods is established first for a single group, the blank is removed from the corresponding side, then the retracted position of the rods is established for the other group, and removal of the blank is completed.

## Patentansprüche

1. Reifen-Aufbautrommel (1) mit einer Mittelwelle (2), die an einer Trägerspindel (10) angebracht ist, mit:
- zwei Scheiben (3), die axial zueinander auf der Mittelwelle (2) gleiten können;
- auf jeder Scheibe (3) eine Gruppierung von Schwenkgliedern (4), die jeweils auf der einen Seite eine Schwenkachse (40) und auf der anderen Seite einen Kopf (41) aufweisen, wobei die genannten Schwenkglieder (4) auf jeder Platte (3) derart angebracht sind, daß die genannten Schwenkachsen (40) stets in der selben Ebene senkrecht zur Achse der Mittelwelle (2) und mit gleichem Abstand zu dieser liegen;
- Steuermitteln, um die genannten Schwenkglieder (4) um ihre Schwenkachse (40) zwischen einer Einklapplage und einer Aufbaulage zu schwenken, wobei die genannte Aufbaulage der Schwenkglieder (4) in jeder der Platten (3) von einer Platte zur anderen symmetrisch ist; und
- einer Umhüllung (5), die die Gruppe von Schwenkgliedern (4) einer jeden Gruppierung abdeckt, und die auf jeder Platte (3) derart verankert ist, daß sie für jede der Gruppierungen eine dichte Einfassung (52) bildet, sowie Mittel, die es gestatten, die genannte Einfassung (52) niedergedrückt zu halten.

2. Trommel nach Anspruch 1, in der in der eingeklappten Lage die Schwenkglieder (4) im wesentlichen parallel zur Achse der Mittelwelle (2) verlaufen.

3. Trommel nach einem der Ansprüche 1 oder 2, in der in der Aufbaulage die Schwenkglieder (4) in Bezug auf die Achse der Mittelwelle (2) einen vorbestimmten Winkel bilden, der zwischen 45° und 90° liegt, wobei der Kopf (41) eines jeden Schwenkglieds (4) in Bezug auf die genannte Welle (2) in einem Abstand angeordnet ist, der größer ist als der Abstand zwischen der Schwenkachse (40) und der genannten Welle (2).

4. Trommel nach Anspruch 3, bei der in einer axialen Lage relativ zu den Schwenkachse (40) der Schwenkglieder (4) einer jeden unveränderten Gruppierung die Schwenkbewegung der genannten Schwenkglieder (4) aus der Aufbaulage in die Einklapplage den Abstand zwischen den Köpfen (41) der Schwenkglieder (4) erhöht.

5. Trommel nach Anspruch 1, mit Abdichtmitteln, um eine dichte Höhlung (23) zwischen den Gruppierungen von Schwenkgliedern (4) einer jeden der Platten (3) zu bilden, und einer pneumatischen Leitung, die imstande ist, axial zwischen den genannten Platten (3) Druckluft heranzuführen, um die axiale, gegenseitige, relative Abspreizung der Platten (3) hervorzurufen, wenn ein dichter Gegenstand die beiden Gruppierungen von Schwenkgliedern (4) dicht abdeckt.

6. Trommel nach Anspruch 5, worin die genannten Abdichtmittel eine dichte Höhlung bilden, die eine Membran (6) aufweist, die beiderseits an jede der Umhüllungen (5) angeschweißt ist, und zwar im wesentlichen an der Stelle, wo diese den Kopf (41) der genannten Schwenkglieder (4) abdecken.

7. Trommel nach Anspruch 6, in der die Membran (6) von einem isotropen, gummiartigen, unverstärkten Material gebildet ist und außerdem eine abnehmbare Muffe (7) aufweist, die einen durchgehenden Ring bildet, der imstande ist, die genannte Membran (6) abzudecken, wobei die genannte Muffe seitliche, nach innen gekrümmte Flügel (70) aufweist, um die Köpfe (41) der Schwenkglieder (4) mindestens leicht abzudecken, und wobei die genannte Muffe (7) aus einem Gummimaterial gebildet ist, das durch Drähte verstärkt ist, die unter null Grad angeordnet sind, und zwar derart, daß sie die Umfangsausdehnung der genannten Muffe bei einem vorbestimmten Winkel blockieren.

8. Trommel nach einem der Ansprüche 1 bis 7, mit Mitteln, die eine elastische Abstoßung zwischen den genannten Platten (3) sicherstellen.

9. Trommel nach einem der Ansprüche 1 bis 8, mit einer Feder (43), die auf allen Köpfen (41) der Schwenkglieder (4) angebracht ist, um eine größere Kontinuität des Umfangsrandes sicherzustellen, der von den Köpfen (41) der Schwenkglieder (4) definiert ist.

10. Trommel nach einem der Ansprüche 1 bis 9, worin jedes Schwenkglied (4) auf der Seite verlängert ist, die der Schwenkachse gegenüberliegt, und zwar durch einen Hebel (42), der fest mit dem genannten Schwenkglied (4) verbunden ist, wobei der genannte Hebel (42) in Bezug auf das genannte Schwenkglied (4) derart ausgerichtet ist, daß, wenn der genannte Hebel (42) zur Achse der genannten Mittelwelle (2) senkrecht angeordnet ist, das genannte Schwenkglied (4) den genannten vorbestimmten Winkel bildet, und worin die genannten Steuermittel im wesentlichen für jede Platte (3) zwei ringförmige Kränze (30,31) aufweisen, von denen der erste fest mit der genannten Platte (3) verbunden ist, der zweite in Bezug auf den ersten axial beweglich ist und die Kränze die genannten Hebel (42) einklemmen, wobei jede Umhüllung (5) auf den genannten Kränzen (3) angebracht ist.

11. Trommel nach einem der Anspruche 1 bis 9, worin jedes Schwenkglied (4) auf der Seite, die der Schwenkachse gegenüberliegt, durch einen Hebel (42) verlängert ist, der fest mit dem genannten Schwenkglied (4) verbunden ist, der genannte Hebel (42) in Bezug auf das genannte Schwenkglied (4) derart ausgerichtet ist, daß, wenn der genannte Hebel (42) senkrecht zur Achse der genannten Mittelwelle (2) angeordnet ist, das genannte Schwenkglied (4) den genannten vorbestimmten Winkel bildet, und eine Rolle (44) am Ende eines jeden Hebels (42) angebracht ist, und worin die genannten Steuermittel im wesentlichen für jede Platte (3) eine Gruppe von Gabeln (45) aufweisen, die jede Rolle (44) aufnehmen und die Schwenkbewegung der Schwenkglieder durch eine Verlagerung parallel zur Achse der genannten Gabeln (45) steuern.

12. Verfahren zur Herstellung eines Reifenrohlings unter Benutzung einer Trommel wie der des Anspruchs 7, mit den folgenden Schritten:
- Benutzen der folgenden Anfangsausbildung für die Trommel: die Schwenkglieder in eingeschwenkter Lage und die Platten axial angenähert;
- Auflegen der Muffe auf die Trommel derart, daß sie die Gruppe der Schwenkglieder einer jeden Platte überdeckt;
- Herstellen der Aufbaulage der Schwenkglieder;
- axiales Entfernen der Platten bis zu einem vorbestimmten Aufbaumaß;
- Aufbauen des genannten Rohlings, indem man die gewünschten Bestandteile an der zweckmäßigen Stelle auf der genannten Muffe aufträgt;
- axiales Annähern der genannten Platten;
- Herstellen der eingeklappten Lage der Schwenkglieder und Abnehmen des Reifenrohlings von der Trommel; und
- Abziehen der genannten, abnehmbaren Muffe aus dem Inneren des genannten Rohlings und deren Wiedergewinnung für die nachfolgende Herstellung.

13. Verfahren nach Anspruch 12, worin man die eingeklappte Lage der Schwenkglieder zunächst für eine einzige Gruppierung herstellt, man den Rohling auf der entsprechenden Seite entfernt, man dann die eingeschwenkte Lage der Schwenkglieder für die andere Gruppierung herstellt und man die Entnahme des Rohlings fertigstellt.
